# EUROPEAN PATENT APPLICATION

(11) **EP 4 298 967 A2**
(43) Date of publication of application: **03.01.2024**
(21) Application number: 23210215.2
(22) Date of filing: 09.04.2021
(51) Int. Cl.: A47J 37/06

(54) **MULTI-FUNCTIONAL OPEN-FLAME OVEN**

(30) Priority: 19.02.2020 GB 202002304; 19.02.2020 GB 202002310; 19.02.2020 GB 202002313; 30.09.2020 GB 202015511
(62) Divisional of application: 21719236.8
(71) Applicant: Gozney Group Ltd, Christchurch Dorset BH23 4FL (GB)
(72) Inventor: GOZNEY, Thomas Robert Llewelyn, Christchurch, Dorset BH23 4FL (GB)
(74) Representative: Haseltine Lake Kempner LLP

(57) **Abstract**

Disclosed is an open-flame oven apparatus comprising a solid-fuel support apparatus for supporting a solid fuel to be burned.

## Description

The present disclosure relates to a multi-functional open-flame oven for cooking or curing foodstuffs, such as a pizza oven.

### Background

Ovens for cooking or curing foodstuffs are known. Most ovens are dedicated to being operated with a single energy source, such as an open-flame heat source (i.e. a gas or solid fuel burner) or an electric heating element. Some ovens may be configured to cook or cure food without the direct application of heat, such as by smoking foodstuffs.

However, it remains the case that ovens are traditionally adapted to one method of cooking or curing or, if more than one cooking/curing method can be achieved, this is to the detriment of the performance of the oven.

It should be understood that further developments in the field of multi-functional ovens would be desirable.

### Statements of Invention

According to a first aspect, there is provided a multi-functional open-flame oven apparatus comprising an oven housing surrounding an oven chamber for containing foodstuffs, the oven chamber comprising an oven floor, a loading opening for loading foodstuffs into the oven chamber; an aspiration inlet for permitting air flow into the oven chamber from the ambient environment; and an aspiration outlet for airflow out of the oven chamber. The oven further comprises an open-flame heating apparatus for heating the oven chamber, a steam-generating apparatus for generating steam for the oven chamber, a smoker apparatus for generating smoke for the oven chamber; and a loading door for closing the loading opening.

The oven floor may be a ceramic and/or stone floor. The floor may be substantially solid and impermeable. The oven floor may be formed from one floor plate, or from a plurality of floor plates which abut to form a substantially continuous oven floor. The oven floor may be substantially continuous. By "substantially continuous", it should be understood that although one or more specific openings may be provided in the oven floor, such as for an aspiration inlet or a gas fuel burner as discussed below, the oven floor may not include regular perforations or some other regular pattern of small openings designed to provide permeation through the oven floor.

The aspiration inlet may be configured to receive an oven accessory. An oven accessory may be removably received in the aspiration inlet.

The aspiration inlet is configured to removably receive the smoker apparatus. In other examples, the smoker apparatus may be permanently installed in the aspiration inlet.

The aspiration inlet may comprise a first inlet opening in an exterior of the oven housing and a second inlet opening into the oven chamber, and an inlet passage formed between the first and second openings. The inlet passage may receive the oven accessory.

The second inlet opening may be formed on the oven floor.

The oven apparatus may further comprise a blanking cap for selectively closing the second inlet opening. Optionally, the blanking cap may be formed from ceramic and/or stone, such as the same material as the oven floor. When located in the second inlet opening, the blanking cap may substantially cover the second inlet opening such that the oven floor is substantially continuous across the second inlet opening and/or airflow through the aspiration inlet is substantially blocked.

The oven apparatus may further comprise a perforated cap for the second inlet opening. The perforated cap may comprise a plurality of aspiration apertures, for example a mesh or perforations. The perforated cap may be removable. The perforated cap may permit airflow into the oven chamber and prevent debris or embers from burned solid fuel from entering the aspiration inlet.

The aspiration inlet may be adjustable so as to regulate airflow through the aspiration inlet.

In some examples, the aspiration inlet may be configured to removably receive a regulator apparatus for regulating the airflow through the aspiration inlet. The regulator apparatus may adjust an effective size or flow area for airflow from the ambient environment into or through the aspiration inlet.

The aspiration inlet or the regulator apparatus may be adjustable to a closed configuration in which substantially no airflow is permitted through the aspiration inlet.

The loading door may be configured to provide the aspiration outlet.

The aspiration outlet may be adjustable so as to regulate airflow through the aspiration outlet. In some examples, the aspiration outlet may be formed about an edge of the loading door. For example, the position of the loading door may be adjusted to adjust the effective area available for airflow out of the oven chamber through the loading aperture.

Additionally or alternatively, the aspiration outlet may comprise an adjustably-sized aperture in the loading door for regulating airflow out of the oven chamber.

In other examples, the aspiration outlet may be provided through the oven housing
The aspiration outlet may be adjustable to a closed configuration in which substantially no airflow is permitted through the aspiration outlet.

The open-flame heating apparatus may be a solid-fuel or gas-fuel open flame heating apparatus. In some examples, the oven apparatus may comprise both a solid-fuel heating apparatus and a gas-fuel heating apparatus.

The oven apparatus may further comprise a temperature sensor for measuring the temperature in the oven chamber.

The smoker apparatus may comprise an auto-feed mechanism for feeding fuel to the smoker apparatus at a predetermined rate. The rate could be determined, for example, by measuring the current temperature in the oven with a temperature sensor and determining (with a processor, for example) a difference between the current temperature and a required temperature, and determining a feeding rate based upon the difference. For example, if the oven is too cool, then the fuel feed rate could be increased.

The steam-generating apparatus may comprise a evaporation tray for receiving water to be evaporated into steam. Optionally, the steam-generating apparatus is located in an upper portion of the oven chamber or on a roof of the oven chamber. A water-feed inlet may be provided on an exterior of the oven housing for receiving water and conveying it to the steam-generating apparatus.

The oven apparatus may further comprise an exhaust flue in communication with the oven chamber for exhausting gases from the oven chamber. Optionally, an inlet for the exhaust flue may be located outside the loading opening such that the loading door is configurable to close the loading opening and thereby substantially prevent airflow from the oven chamber to the exhaust flue.

The open-flame heating apparatus may be configured to heat the oven chamber to temperatures up to and exceeding 450 degrees Celsius. The oven apparatus may be suitable for use a pizza oven, which requires temperatures of 450 degrees Celsius.

According to a second aspect, there is provided an open-flame oven apparatus comprising: an oven housing surrounding an oven chamber for containing foodstuffs, the oven chamber comprising an oven floor; a loading opening for loading foodstuffs into the oven chamber; an aspiration inlet for permitting air flow into the oven chamber from the ambient environment; a loading door for closing the loading opening, the loading door configured to provide an adjustable aspiration outlet for airflow out of the oven chamber; and a solid-fuel support apparatus for supporting a solid fuel to be burned, wherein the solid-fuel support apparatus comprises a support surface on which solid fuel can be supported, the support surface comprising a plurality of aspiration apertures for permitting airflow to and around a supported solid fuel on the support surface; wherein the solid-fuel support apparatus is configured such that air flow into the oven chamber via the aspiration inlet passes though the apertures of the support surface.

It should be understood that the solid-fuel support apparatus is configured to support fuel in proximity to the aspiration inlet (or else in suitable a position relative to the aspiration inlet) such that air flow into the oven chamber via the aspiration inlet is directed towards or through solid fuel supported on the support apparatus.

The aspiration inlet may comprise an aperture in the oven floor. The solid-fuel support apparatus may comprise a perforated cap configured to be received in or arranged over the aperture, such that air flow into the oven chamber via the aspiration inlet passes through the aspiration apertures of the perforated cap.

The perforated cap may be removable.

The solid-fuel support apparatus may comprise a fuel rack configured to support solid fuel above the oven floor. The fuel rack may be configured to be positioned over the aperture in the oven floor. The support surface may be arranged above the oven floor, such that the solid-fuel support apparatus defines an aspiration chamber between the oven floor and the support surface, the aspiration chamber in communication with the aspiration inlet so as to receive air from the aspiration inlet and distribute received air to the plurality of aspiration apertures in the support surface.

The solid-fuel support apparatus may comprise a substantially impermeable peripheral wall. The peripheral wall may be configured such that airflow from the aspiration chamber into the oven chamber substantially provided via the aspiration apertures in the support surface. In other words, the peripheral wall may substantially seal a periphery of the aspiration chamber. In some examples, the peripheral wall may completely encircle the aspiration chamber.

The solid-fuel support apparatus may be configured to abut a wall of the oven chamber, such that the aspiration chamber is formed between the oven floor, the oven chamber wall, the peripheral wall, and the support surface. Where a peripheral wall is provided, the peripheral wall may form part of the perimeter of the aspiration chamber, while the other portion of the perimeter is formed by the oven chamber wall.

The aspiration inlet is adjustable so as to regulate airflow through the aspiration inlet. The aspiration inlet may be configured as described above for the first aspect. For example, the aspiration inlet is configured to removably receive a regulator apparatus for regulating the airflow through the aspiration inlet, and may be adjustable to a closed configuration in which substantially no airflow is permitted through the aspiration inlet.

According to a third aspect, an oven apparatus may be provided having features according to both of the first and second aspects.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a perspective view of an exemplary multi-functional open-flame oven apparatus;
Figure 2 is a sectional front view of the oven apparatus of Figure 1;
Figure 3 is a sectional side view of the oven apparatus of Figure 1;
Figure 4 is a detailed sectional view of an aspiration inlet of the oven apparatus of Figure 1 in a first configuration;
Figure 5 is a detailed sectional view of the aspiration inlet of Figure 3 in a second configuration;
Figure 6 is a front view of the oven apparatus of Figure 1 showing an aspiration outlet in a first configuration;
Figure 7 is a front view of the oven apparatus of Figure 1 showing the aspiration outlet in a second configuration;
Figure 8 is a front view of an oven apparatus showing an alternative aspiration outlet;
Figure 9 is an internal perspective view of the oven chamber of the oven apparatus of Figure1 showing a solid-fuel heating apparatus; and
Figure 10 is a sectional front view of an alternative exemplary oven apparatus comprising a solid-fuel heating apparatus and a gas-fuel heating apparatus.

### Detailed Description

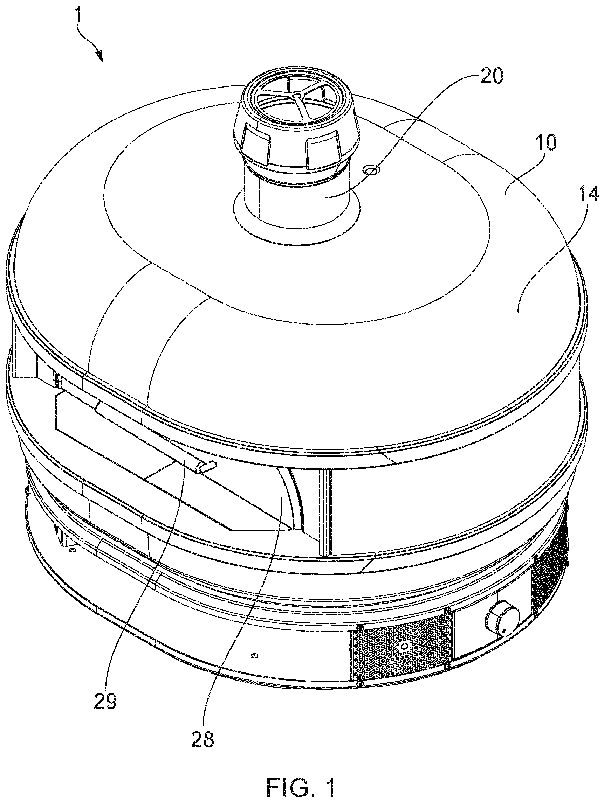

Figure 1 shows a perspective view of a multi-functional open-flame oven apparatus 1. The multi-functional open-flame oven apparatus 1 may be referred to within this disclosure as an "oven" for brevity.

The oven apparatus 1 is multi-functional. In other words, the same oven apparatus 1 can be utilised for a number of different cooking and curing methods. Further, the oven is designed for, amongst other methods, open-flame cooking. Open-flame cooking, which can be provided with gas- or solid-fuel heating apparatus is capable of producing oven temperatures which are commonly well in excess of non-open-flame heating. The oven 1 is heatable to temperatures of 450-500 degrees Celcius or more, which enables cooking of Neapolitan-style pizza or other high-temperature cooking which is not achievable within conventional electrically-heated ovens. The requirement for open-flame cooking puts restrictions on the materials and construction of the oven, such as materials which are capable of operating effectively at high temperature and materials which are sufficiently insulating and heat-retaining to maintain a high oven temperature efficiently.

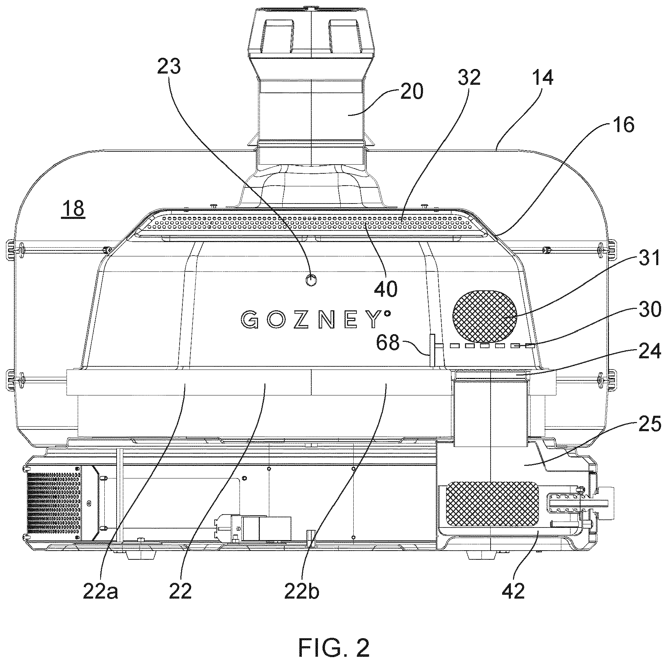

Referring also to **Figure 2****,** which shows a cross-sectional front view of the oven apparatus 1, the oven apparatus 1 comprises an oven housing 10. The oven housing 10 forms an external shell of the oven and defines within the housing an oven chamber 12. The oven chamber 12 is the internal volume of the oven which contains foodstuffs for cooking or curing.

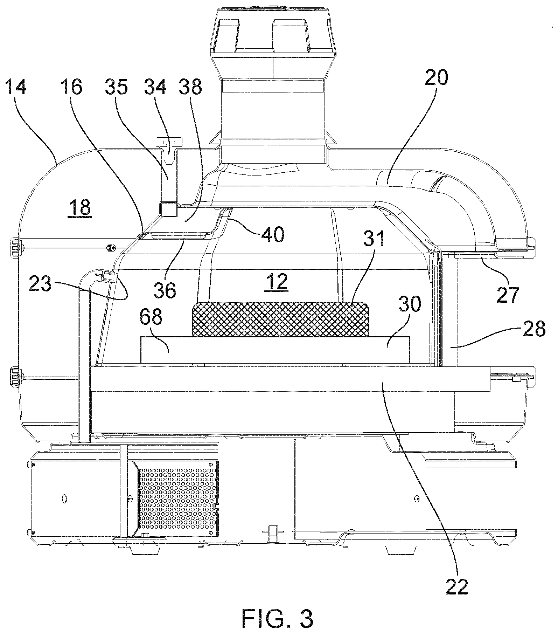

In order to provide improved heat retention within the oven chamber 12 and prevent extreme external temperatures on the oven housing (which could be a burn hazard) the oven housing 10 has a dual-shell construction. The housing 10 has an external layer 14 which forms the outer shell of the oven, and an internal layer 16, which forms the internal wall and defines the oven chamber 12. The internal and external layers 14,16 are spaced apart so as to form an insulating gap 18 therebetween. In some examples, the insulating gap 18 may be filled with insulating material, such as rock wool to further improve the oven's insulation and heat-retention. In this example, an oven exhaust flue 20 is also provided in the insulating gap 18, a portion of exhaust flue 20 conforms to the outer surface of the internal layer 16 of the oven housing 10, as illustrated in Figure 3, which may further improve heat retention.

Still referring to Figure 2, the oven chamber 12 comprises an oven floor 22. The oven floor 22, in this example, is formed from stone or ceramic material, which is highly insulating and has excellent heat-retention. Thus, the oven floor 22 can be effectively heated to maintain a high temperature within the oven. In this example, for ease of construction, the oven floor 22 is formed from two floor plates 22a,b, which form the left and right sides of the oven floor 22 respectively and abut along a straight central line to form a substantially continuous oven floor. The floor 22 is substantially solid and impermeable. In other examples, the floor may be formed from one, or more than two floor plates.

The oven floor 22 has an inlet opening 24 formed therethrough, which shall be described in more detail below. The inlet opening 24 forms part of an aspiration inlet 25 for permitting air flow into the oven chamber 12 from the ambient environment.

The oven floor may be formed from one floor plate, or from a plurality of floor plates which abut to form a substantially continuous oven floor. The oven floor may be substantially continuous. By "substantially continuous", it should be understood that although one or more specific openings may be provided in the oven floor, such as for an aspiration inlet or a gas fuel burner as discussed below, the oven floor may not include regular perforations or some other regular pattern of small openings designed to provide permeation through the oven floor.

The oven apparatus 1 comprises a loading opening 26 (e.g. an oven mouth) for loading foodstuffs into the oven chamber 12. The loading opening 26 has is large and wide, around two thirds of the width and height of the oven chamber 12, such that large foodstuffs or cooking containers can be loaded into the oven chamber 12.

The oven apparatus 1 further includes loading door 28 for closing (i.e. substantially sealing) the loading opening 26, which shall be described in more detail below. The loading door 28 is configured to provide an adjustable aspiration outlet for airflow out of the oven chamber 12. The loading door 28 generally conforms to the shape of the loading opening 26 and can be placed against or within the loading opening 26 to close it. In some examples, the loading door 28 may be hingedly or slidably attached to the oven housing 10 for convenient and reliable placement. The loading door 28 comprises a handle 29 for a user to manipulate or lift the door. In other examples, the loading door 28 may be a standalone component of the oven apparatus 1 which can be manually placed to close the loading opening 26.

The exhaust flue 20 is configured for communication with the oven chamber 12, so as to exhaust exhausting gases from the oven chamber 12 upwards and away from the front of the oven and the loading opening 26. The inlet 27 for the exhaust flue 20 is located outside the loading opening 26 such that the loading door 28 can be configurable to close the loading opening 26 and thereby substantially prevent airflow from the oven chamber 12 to the exhaust flue 20.

The oven apparatus 1 further comprises an open-flame heating apparatus 30 for heating the oven chamber 12. In this example, the open-flame heating apparatus is a solid-fuel heating apparatus 30 which takes the form of a solid-fuel support apparatus or rack 30 for supporting and efficiently burning solid fuel 31, such as wood. This particular solid-fuel rack 30 shall be described in more detail below. In other examples, the solid-fuel heating apparatus may not comprise a rack. For example, the solid-fuel heating apparatus could take the form of a solid-fuel placed directly onto the oven floor 22. It should be understood that the oven apparatus 1 may be configured and comprise the means for solid fuel heating (i.e. a solid-fuel heating apparatus) even if the solid fuel itself is not present in the oven. For example, a certain area or areas of the oven floor 22 may be designed or specifically designed for locating solid fuel to be burned, such that the oven is heated more uniformly or efficiently, or to maximise the available area on the oven floor 22 for cooking. If solid fuel is to be placed directly onto the oven floor, it should be understood that the oven floor 22 must be of a particular construction to enable this. For example, a thin metal floor may not be capable of withstanding the extreme temperatures of a burning solid fuel without being damaged or warping.

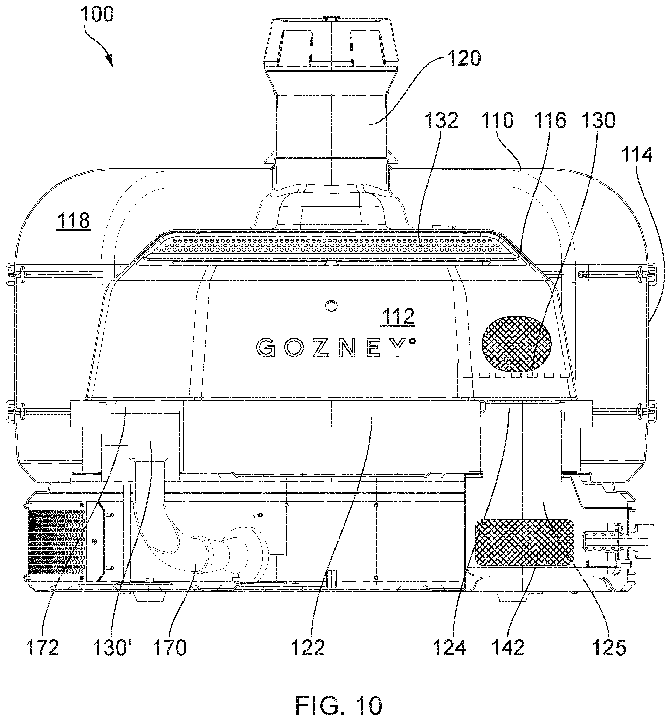

In other examples, such as that of Figure 10 described below, the open-flame heating apparatus may alternatively or additionally be a gas-fuel heating apparatus, such as a gas burner.

Referring to **Figure 3****,** the oven apparatus 1 comprises a steam-generating apparatus 32 for generating steam for the oven chamber 12. For some types of cooking, such as baking bread, it may be desired or required to produce steam to aid or improve the cooking process. The oven apparatus 1 therefore comprises a steam-generating apparatus 32. The steam-generating apparatus 32 is configured to receive water, and to evaporate the water into steam, and convey the steam into the oven chamber 12.

In order to introduce water into the steam-generating apparatus 32, an aperture 34 is, is provided in the external housing layer 14, and in this example on the top or roof the oven 1. Accordingly, the aperture 34 is easily accessible by a user to introduce water into the steam-generating apparatus 32, and thus, steam into the oven chamber 12 vapour without requiring direct access to the interior of the oven chamber 12, such as via the loading opening 26. Thus, steam can be introduced into the oven chamber 12 while the oven chamber is sealed by the loading door 28. A conduit 35 is provided for conveying water from the external aperture 34 to an evaporation tray 36 provided within the oven chamber 12.

The evaporation tray 36 is configured to disperse water for evaporation. The evaporation tray 36 has a wide, flat surface for dispersing liquid so as to increase the surface area of the water to promote rapid evaporation. In other examples, the evaporation tray 36 could have surface-area-increasing features, such as fins, undulations, or cavities, to increase the contact area between the water and the evaporation tray 36.

In this example, the steam-generating apparatus 32 forms a steam chamber 38 between evaporation tray 36 and the internal housing layer 16. The evaporation tray 26 comprises perforations 40 which permit steam to pass from the steam chamber 38 into the oven chamber 12. It will be understood that it is configured such that, when the oven chamber 12 is heated in use by the open-flame heating apparatus, the evaporation tray 36 shall be heated, meaning that water received by the evaporation tray 36 will be heated and, thus, evaporated by the heat within the oven chamber 112.

Although this example comprises an evaporation tray which is heated indirectly by the open-flame heating apparatus 30, it should be understood that the steam-generating apparatus could alternatively be a stand-alone device for generating steam, such as an electric boiler which generates steam and injects it into the oven chamber 12. In these examples, the steam-generating apparatus is capable of introducing steam into the oven chamber 12 while the loading when it is required. The steam apparatus is located in an upper portion of the oven chamber 12, in particular on a roof of the oven chamber 12, where the oven temperature may be highest, which may result in quicker or more efficient evaporation of water.

In addition to the open-flame heating apparatus 30, and the steam-generating apparatus 32, the oven apparatus 1 is yet more versatile by virtue of a smoker apparatus 42 for generating smoke for the oven chamber 12.

The smoker apparatus 42 is configured to provide a source of smoke for the oven chamber 12. The smoker apparatus 42 can be configured to "hot smoke" or "cold smoke" a foodstuff contained in the oven chamber 12.

In this example, the smoker apparatus 42 is configured as a smoker tray 44 which is configured to contain a smoke fuel 46, such as wood chips, which are burned in a controlled manner in order to produce smoke for smoking the foodstuff. The smoker apparatus 42 is provided, in this example, below the oven floor 22 and within the aspiration inlet 25, and is in communication with the oven chamber 12 via the opening 24 in the oven floor 22. Thus, as the smoke fuel 46 is burned, the hot smoke generated can flow upwards and into the oven chamber 12, so as to produce a smoky atmosphere within the chamber for hot or cold smoking. As the smoker apparatus 42 is provided within the aspiration inlet 25, it can receive air in a controlled manner to thereby control the burning rate and, thus, the amount of smoke produced.

It should be understood that, in other examples, the smoker apparatus may be formed differently, or may provide smoke for the oven chamber 12 in a different manner to the illustrated example. For example, the smoker apparatus may be provided within the oven chamber 12, such as on the floor or wall(s) of the oven chamber.

In some examples, the smoker apparatus may comprise an auto-feed mechanism (not shown) for feeding fuel to the smoker apparatus at a predetermined rate. The rate could be determined, for example, by measuring the current temperature in the oven with a temperature sensor and determining (with a processor, for example) a difference between the current temperature and a required temperature, and determining a feeding rate based upon the difference. For example, if the oven is too cool, then the fuel feed rate could be increased.

As described above, the oven apparatus 1 comprises an aspiration inlet 25 and an aspiration outlet. The aspiration inlet and outlet generally form an aspiration system for adjustable aspiration of the oven chamber 12, which enables the oven apparatus 1 to be used in an increased range of methods compared to conventional ovens, i.e. in cooking, smoking (hot and cold), steaming, and combinations thereof.

The oven apparatus 1 further comprises a temperature sensor 23 for measuring the temperature in the oven chamber.

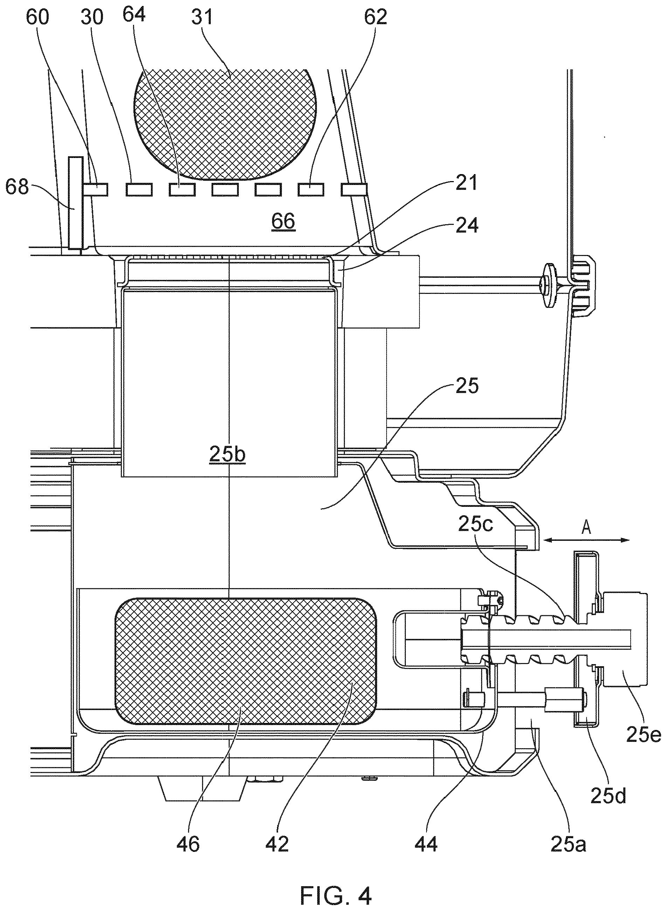

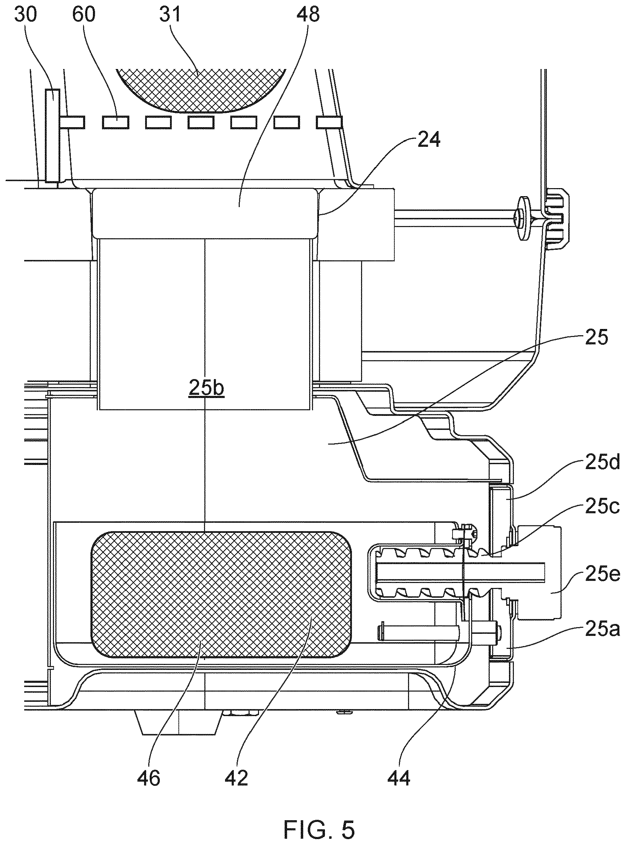

Turning now to **Figures 4** **and** **5****,** the aspiration inlet 25 will be described in more detail. Figures 4 and 5 show a detailed cross-sectional front view of the aspiration inlet 25.

In Figure 4, the aspiration inlet 25 is shown in Figure 4 in an open configuration, in which air can flow from the ambient environment into the oven chamber 12 via the inlet 25. In this example, the effective flow area of the aspiration inlet 25 can be adjusted in order to carefully regulate the airflow into the oven chamber 12.

The aspiration inlet 25 comprises a first inlet opening 25a formed in the exterior of the oven housing 10. Thus, the first inlet opening 25a is exposed to the ambient environment and can receive air from the ambient environment. The aspiration inlet further comprises an inlet conduit 25b which leads from the first inlet opening to the inlet opening 24 in the oven floor 22, which is the second inlet opening 24. Thus, air received from the ambient environment by the first inlet opening 25a can flow via the inlet conduit 25b and through the second inlet opening 24 into the oven chamber 12, so as to provide aspirating airflow to the oven chamber 12 and/or to the open-flame heating apparatus 30 when it is in use.

The aspiration inlet 25 further comprises a regulator apparatus 25c, which is operable to adjust the effective flow area of the aspiration inlet 25 so as to regulate the airflow into the oven chamber 12. In this example, the regulator apparatus 25c is formed as an adjustable door 25d which can be moved away and towards the first inlet opening 25a, as shown by the arrow A, so as to adjust the flow area of the first inlet opening 25a. It should be understood that, the airflow via the the aspiration inlet 25 will be correlated to the flow area of the first inlet opening 25a. The regulator apparatus 25c is, in this example, configured as a manual screw 25e which can be rotated by the user in order to linearly translate the door 25d towards and away from the opening. Rotating the screw 25e clockwise will move the door 25d towards the first inlet opening 25a (thus reducing flow area), while rotating the screw 25e counter-clockwise will move the door away from the opening 25a (thus increasing flow area).

In this example, the aspiration inlet 25 is also configured to receive an oven accessory and, in particular, the smoker apparatus 42. The smoker apparatus 42 is removably received in the aspiration inlet 25. In this particular example, the smoker tray 44 is slidably received in the inlet conduit 25b.In other examples, the smoker apparatus 42 may be permanently installed in the aspiration inlet 25, or elsewhere. Thus, when in use, the smoker apparatus 42 can directly receive a regulated airflow from the ambient environment via the aspiration inlet 25. In this example, the smoker apparatus 42 and is located directly below the second inlet opening 24. Therefore, when a solid fuel is burned in the oven chamber 12, the smoker tray 44 can be alternatively utilised as an ash-tray. Ash or debris on the oven floor 22 can be swept into the second inlet opening 24, where it will conveniently fall directly into the smoker tray 44. The smoker tray 44 can then be removed to empty the ash and debris without causing excessive mess.

In this example, the regulator apparatus 25c, and in particular the screw 25e and the door 25d are formed integrally with the smoker tray 44. The screw 25e engages with the smoker tray 44 such that the smoker tray 44 remains position in the conduit 25b, while the door 25d is moved into and out of the first inlet opening 25a by rotating the screw 25e. As the smoker apparatus 42 can be slidably removed, if maximum airflow into the oven chamber 12 is required, the entire smoker apparatus 42 with the integral regulator apparatus 25c can be removed to maximise the effective area for airflow through the aspiration inlet 25. In other examples, the smoker apparatus 42 and the regulator apparatus 25c may be formed separately. It should be understood that the illustrated example provides a specific example of an aspiration inlet and regulator apparatus, and other methods of regulating the airflow into the oven chamber 12 may be achievable.

In Figure 5, the aspiration inlet 25 is shown in a closed configuration, in which no airflow or very restricted airflow is permitted into the oven chamber 12 via the aspiration inlet 25. In this example, the door 25d is sealed in the first inlet opening 25a such that there is no area (or an extremely limited area) for airflow into the aspiration inlet 25 from the ambient environment.

As shown in Figure 4, in some examples the oven apparatus 1 may be provided with a perforated cap 21 for the second inlet opening 24. The perforated cap 21 comprises a plurality of aspiration apertures, for example formed via a mesh or a sheet material having perforations therethrough. The perforated cap 21 is removable and can be placed in the second inlet opening 24 to prevent debris or embers from burned solid fuel from entering the aspiration inlet 25 while still permitting airflow into the oven chamber. As will be described further below, the perforated cap 21 may form a solid-fuel support apparatus configured to enable the positioning of a solid fuel fire directly over the aspiration inlet 25 so as to provide improved aspiration of the fire, and thereby improve combustion.

In some examples, the oven apparatus 1 may be provided with a blanking cap 48 for selectively closing the second inlet opening, as shown in Figure 5. Optionally, the blanking cap 48 may be formed from ceramic and/or stone, such as the same material as the oven floor. When located in the second inlet opening, the blanking cap may substantially cover the second inlet opening such that the oven floor is substantially continuous across the second inlet opening and/or airflow through the aspiration inlet is substantially blocked. This may, for example, maximise floor space within the oven chamber 12 when the aspiration inlet 25 is not required.

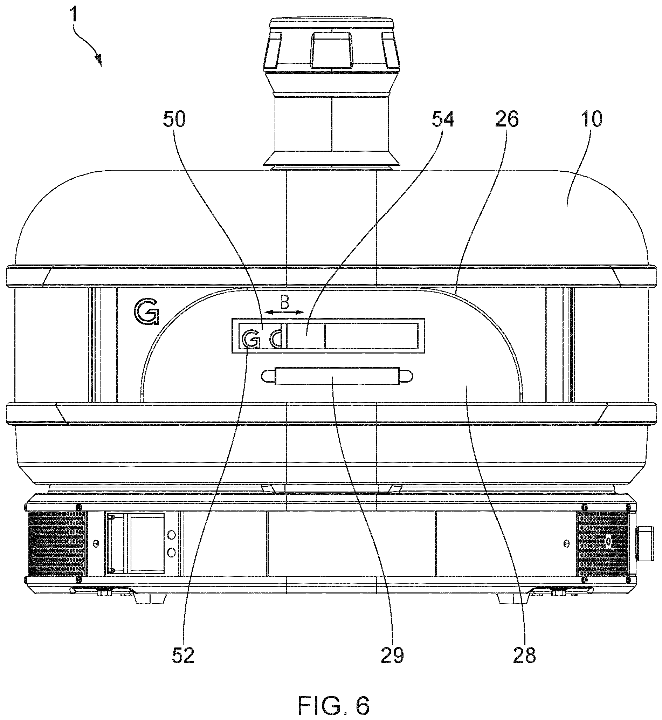

With reference to **Figures 6 to 8****,** an exemplary aspiration outlet 50 shall now be described in detail.

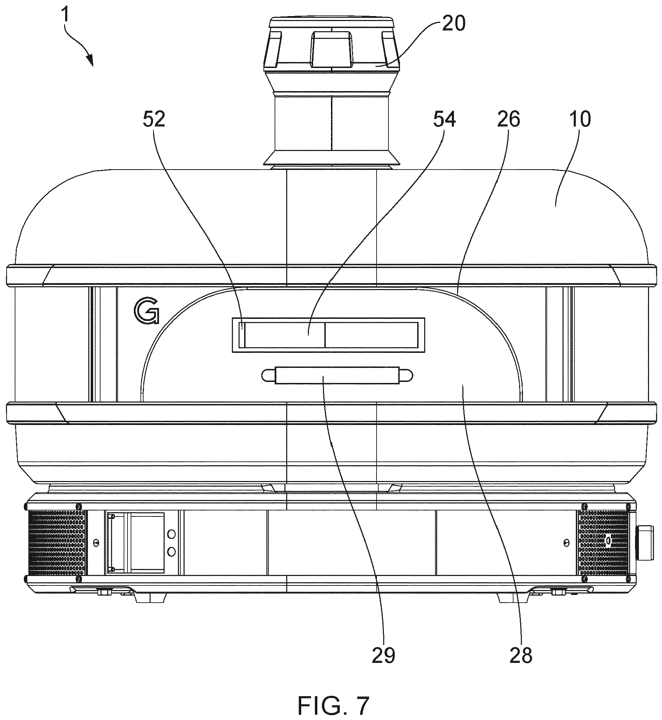

Figures 6 and 7 show a first example of an aspiration outlet 50 (i.e. air vent). In this example, the aspiration outlet is formed as an adjustably-sized aperture 52 in the loading door 28. When the loading door 28 is located in a position to close the loading opening 26, it effectively prevents airflow through the loading opening 26. However, as shown in Figure 6, the adjustable aperture 52 can be configured in an open configuration. In this open configuration, the aspiration outlet 50 is formed through the loading door 28, such that airflow out of the oven chamber 12 can be regulated. The adjustable aperture 52 is formed by a slidable door 54 which can be moved to the right to increase the area of the outlet 52 and to the left to decrease the area of the outlet 50, as shown by the arrow B in Figure 6. Thus, the airflow out of the aspiration outlet can be regulated by adjusting the size of the aperture 52 using the door 54.

In Figure 7, the aspiration outlet 50 is shown in a closed configuration, in which no airflow or very restricted airflow is permitted out of the oven chamber 12 via the aspiration outlet 50. In this example, the door 54 moved completely to the left such that there is no area (or an extremely limited area) for airflow out of the aspiration outlet 50 from the oven chamber 12.

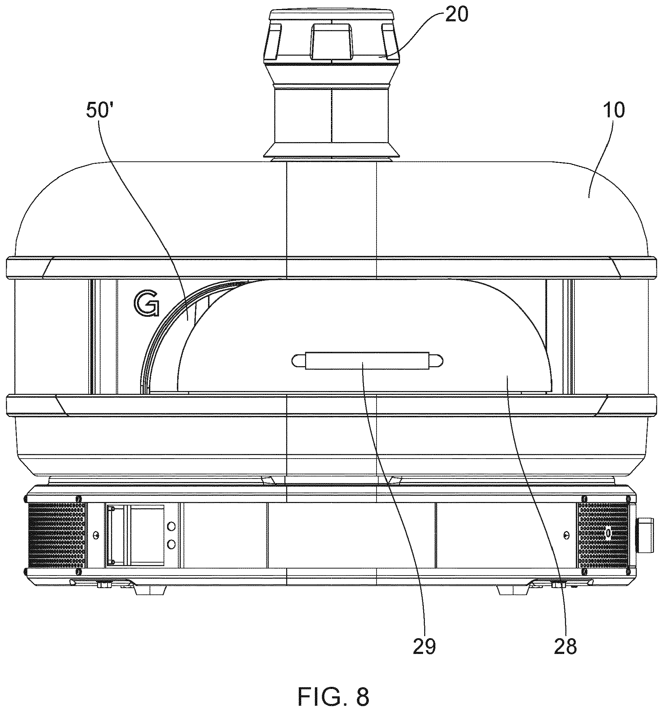

In other examples, an aspiration outlet 50' may be formed about an edge of the loading door 28. As shown in Figure 8, the position of the loading door 28 may be adjusted relative to the loading opening 26 so as to adjust the effective area available for airflow out of the oven chamber 12.

In yet further examples, an aspiration outlet may provided separately to the loading door or loading opening, for example as a separate adjustable aperture through the oven housing. In other examples, a plurality of aspiration outlets may be provided, for example multiple adjustable air vents in the loading door and/or oven housing so as to provide yet further control of air flow.

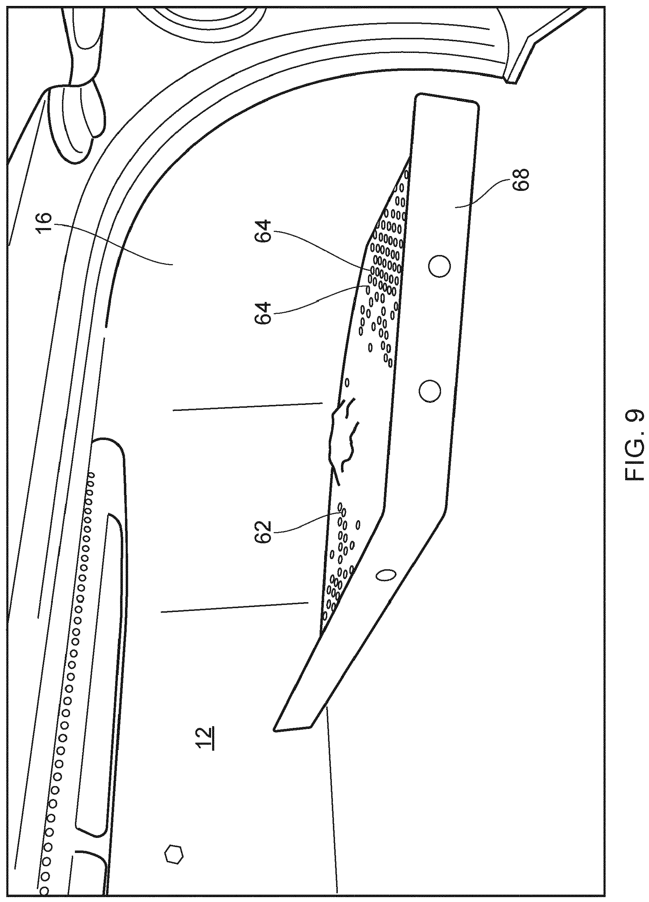

**Figure 9** shows a perspective view of the oven apparatus 1 and, in particular, an interior of the oven chamber 12 and the open-flame heating apparatus 30. In this example, the open-flame heating apparatus 30 is a solid-fuel heating apparatus.

Also with reference to Figure 4, the heating apparatus 30 comprises a solid-fuel support apparatus.

In some examples, the fuel support apparatus may be particular a fuel rack 60 for supporting the solid fuel 31 to be burned.

As can be observed in Figure 9, the fuel rack is configured to be supported on the oven floor 22 and comprises a support surface 62 on which solid fuel 31 can be supported. The support surface 62 comprises a plurality of aspiration apertures for permitting airflow to and around the supported solid fuel 31. In this example, the support surface 62 is formed by a perforated sheet of metal. The surface 62 comprises a plurality of aspiration apertures 64 (i.e. perforations) through which air can flow to provide airflow to the surface of the fuel 31 and, in particular, the underside of the fuel 31 which is against the support surface 62. In other examples, the support surface may be formed from a mesh material or other material which provides distributed airflow therethrough. In this example, the support surface 62 is flat. However, in other examples, the support surface may be contoured or otherwise shapes, for example to provide a locating groove or grooves for a log or other fuel to be burned.

The fuel rack 60 defines an aspiration chamber 66 between the oven floor 22 and the support surface 62. The aspiration chamber 66 is formed over the second inlet opening 24 such that the chamber 66 is in direct communication with the aspiration inlet 25. Thus, the aspiration chamber 66 can to receive air from the aspiration inlet 25 and distribute this received air across the support surface and through the plurality of aspiration apertures 64 in the support surface 62. Therefore, improved air flow can be provided to the fuel 31 burning on the rack 60. In addition, debris or ash from the burning fuel 31 can fall through the apertures for convenient and easy cleaning.

The fuel rack 60 further comprises a substantially impermeable peripheral wall 68. The peripheral wall 68 extends around a periphery of the support surface 62 and abuts the internal housing layer 16 of the oven chamber 12 at its ends. Thus, the support surface 62 extends between the peripheral wall 68 and the wall of the oven chamber 12. Therefore, in this example, the aspiration chamber 66 is defined between the oven floor 22, the oven chamber wall (formed by internal housing layer 16), the peripheral wall 68, and the support surface 62. Part of the perimeter of the aspiration chamber 66 is formed by the peripheral wall 68, while the other portion of the perimeter is formed by the oven chamber wall.

The peripheral wall 68 is shaped such that it closely contacts the oven floor 22 along its bottom surface and the internal housing layer 16 at its ends, meaning that airflow from the aspiration chamber 66 into the oven chamber 12 is provided predominantly via the aspiration apertures 64 in the support surface 62. In some other examples, the peripheral wall may completely encircle the aspiration chamber, such that the rack 60 does not need to be located against the wall of the oven chamber 12.

The fuel rack 30 is not fixed within the oven chamber 12, so that it can be removed for cleaning. As described above, ash which has fallen through the aspiration apertures 64 onto the oven floor 22 can be swept into the opening 24 (and thus the smoker tray 44) for convenient removal.

In other examples, as shown in **Figure 4****,** the fuel support apparatus may take the form of a perforated cap 21 instead of (or sometimes in addition to) a fuel rack 30.

In examples comprising a perforated cap 21, the cap 21 may be configured to be received in the aperture 24 in the oven floor 22, as shown in Figure 4. In other examples, the cap 21 may be arranged over the aperture 24. It should be understood that this configuration of a fuel support apparatus allows solid fuel 31 to be placed directly over the perforated cap 21 (and thus the aperture 24), such that air flow into the oven chamber via the aspiration inlet passes through the aspiration apertures of the perforated cap 21 and oxygenates the burning fuel which is supported by the cap 21.

As shown in Figure 4, the perforated cap 21 forms a support surface for solid fuel. As is clear from Figure 4, in this example, the surface is substantially level with the oven floor 22 (i.e. with the upper surface of the oven floor 22) such that the oven floor 22 and the surface of the cap 21 for a substantially continuous supporting surface. Therefore, a solid fuel fire of any desired size can be built on the oven floor 22 over the cap 21, such that aspirating air can be delivered directly underneath the burning fuel to the heart of the fire so as to provide improved combustion.

Where a cap 21 is used, the cap 21 may be removable. This may facilitate easy cleaning of the oven.

Referring to **Figure 10****,** an alternative oven apparatus 100 is shown. Like features of the oven apparatus 100 with the oven apparatus 1 are indicated with reference numbers differing by 100, for example, the oven housing 110.

The oven apparatus 100 differs from the oven apparatus 1 in that it comprises both a solid-fuel heating apparatus 130 and a gas-fuel heating apparatus 130'. The gas-fuel heating apparatus 130' may be fuelled from a mains gas source or a bottled gas source, connected via a gas supply apparatus 170.

The gas-fuel heating apparatus may be provided in a further opening 172 in the oven floor 122. The opening 172 may be provided with a blanking cap or a perforated cap (not shown), as described above for caps 48 and 21. In some examples, the opening 172 may be the same size and shape as the second inlet opening 124 so that the same blanking or perforated cap can be used for both openings, depending upon which open-flame heat source is being used. In some examples, two blanking caps may be provided so that both openings 124 and 172 can be blanked off simultaneously for yet further versatility of the oven and improved useable oven floor area.

It should be understood that the oven apparatuses described herein provide multi-functional cooking and curing of foodstuffs the likes of which are not achievable within conventional open-flame ovens. By providing precisely adjustable aspiration for the oven chamber and multiple cooking and curing apparatus within the same oven apparatus, a single oven chamber can be used to cook, smoke, and/or steam foodstuffs. Other features of the oven apparatus described herein provide yet further versatility. With the presently disclosed oven apparatuses, the aspiration inlet and outlet can be adjusted to regulate the airflow through the oven chamber 12 to the particular method or methods being used. For example, in cold smoking, low airflow is required so the airflow can be regulated to provide the desired flow, while in hot smoking or wood-fired cooking, greater airflow may be required, so the airflow can be increased. During steaming, no airflow may be required in order to maintain a humid environment, so the airflow can be completely stopped. In conventional open-flame ovens, this flexibility cannot be achieved and thus the cooking or curing methods available are severely limited.

It will be appreciated by a skilled person that although the invention has been described by way of example, with reference to exemplary examples, it is not limited to the disclosed examples and that alternative examples could be constructed without departing from the scope of the invention as defined by the appended claims.

For the avoidance of doubt, the present disclosure includes the subject matter recited in the following numbered Statements:
Statement 1. A multi-functional open-flame oven apparatus (1, 100) comprising:
   an oven housing (10, 110) surrounding an oven chamber (12, 112) for containing foodstuffs, the oven chamber (12, 112) comprising an oven floor (22);
   a loading opening (26) for loading foodstuffs into the oven chamber (12, 112);
   an aspiration inlet (25) for permitting air flow into the oven chamber (12, 112) from the ambient environment;
   an aspiration outlet (50, 50') for airflow out of the oven chamber (12, 112);
   an open-flame heating apparatus (30) for heating the oven chamber (12, 112);
   a steam-generating (32) apparatus for generating steam for the oven chamber (12, 112);
   a smoker apparatus (42) for generating smoke for the oven chamber (12, 112); and
   a loading door (28) for closing the loading opening (26).
Statement 2. A multi-functional open-flame oven apparatus (1, 100) as claimed in Statement 1, wherein the oven floor (22) is a ceramic and/or stone floor.
Statement 3. A multi-functional open-flame oven apparatus (1, 100) as claimed in either of Statements 1 or 2, wherein the aspiration inlet (25) is configured to receive an oven accessory.
Statement 4. A multi-functional open-flame oven apparatus (1, 100) as claimed in any one of the preceding Statements, wherein the aspiration inlet (25) is configured to removably receive the smoker apparatus (42).
Statement 5. A multi-functional open-flame oven apparatus (1, 100) as claimed in any one of the preceding Statements, wherein the aspiration inlet (25) comprises a first inlet opening (25a) in an exterior of the oven housing (10, 110) and a second inlet opening (24) into the oven chamber (12, 112), and an inlet (27) passage formed between the first and second openings.
Statement 6. A multi-functional open-flame oven apparatus (1, 100) as claimed in Statement 5, wherein the second inlet opening (24, 25m) is formed on the oven floor (22).
Statement 7. A multi-functional open-flame oven apparatus (1, 100) as claimed in Statement 6, further comprising one or more of:
   a) a blanking cap (48) for selectively closing the second inlet opening (24), optionally wherein the blanking cap (48) is formed from ceramic and/or stone; and
   b) a perforated cap (21) for the second inlet opening (24).
Statement 8. A multi-functional open-flame oven apparatus (1, 100) as claimed in any preceding Statement, wherein the aspiration inlet (25) is adjustable so as to regulate airflow through the aspiration inlet (25).
Statement 9. A multi-functional open-flame oven apparatus (1, 100) as claimed in Statement 8, wherein the aspiration inlet (25) is configured to removably receive a regulator apparatus (25c) for regulating the airflow through the aspiration inlet (25).
Statement 10. A multi-functional open-flame oven apparatus (1, 100) as claimed in any one of Statements 8 or 9, wherein the aspiration inlet (25) is adjustable to a closed configuration in which substantially no airflow is permitted through the aspiration inlet (25).
Statement 11. A multi-functional open-flame oven apparatus (1, 100) as claimed in any preceding Statement, wherein the loading door (28) is configured to provide the aspiration outlet (50, 50').
Statement. 12 A multi-functional oven apparatus (1, 100) as claimed in any preceding Statement, wherein the aspiration outlet (50, 50') is adjustable so as to regulate airflow through the aspiration outlet (50, 50'), optionally wherein the aspiration outlet (50, 50') is adjustable to a closed configuration in which substantially no airflow is permitted through the aspiration outlet (50, 50').
Statement 13. A multi-functional open-flame oven apparatus (1, 100) as claimed in any preceding Statement, wherein the aspiration outlet (50, 50') comprises an adjustably-sized aperture (34) in the loading door (28) for regulating airflow out of the oven chamber (12, 112).
Statement 14. A multi-functional open-flame oven apparatus (1, 100) as claimed in any preceding Statement, wherein the open-flame heating apparatus (30) is a solid-fuel or gas-fuel open flame heating apparatus, optionally wherein the oven apparatus comprises a solid-fuel heating apparatus (130) and a gas-fuel heating apparatus (130').
Statement 15. A multi-functional open-flame oven apparatus (1, 100) as claimed in any preceding Statement, wherein the smoker apparatus (42) comprises an auto-feed mechanism for feeding smoke fuel to the smoker apparatus (42) at a predetermined rate.
Statement 16. A multi-functional open-flame oven apparatus (1, 100) as claimed in any preceding Statement, wherein the steam-generating apparatus (32) comprises an evaporation tray (36) for receiving water to be evaporated into steam, optionally wherein the steam-generating apparatus (32) is located in an upper portion of the oven chamber (12, 112) or on a roof of the oven chamber (12, 112).
Statement 17. A multi-functional open-flame oven apparatus (1, 100) as claimed in any preceding Statement, further comprising an exhaust flue (20) in communication with the oven chamber (12, 112) for exhausting gases from the oven chamber (12, 112), optionally wherein an inlet (27) for the exhaust flue (20) is located outside the loading opening (26) such that the loading door (28) is configurable to substantially prevent airflow from the oven chamber (12, 112) to the exhaust flue (20).
Statement 18. A multi-functional open-flame oven apparatus (1, 100) as claimed in any preceding Statement, further comprising a temperature sensor (23) for measuring the temperature in the oven chamber (12, 112).
Statement 19. A multi-functional open-flame oven apparatus (1, 100) as claimed in any preceding Statement, wherein the open-flame heating apparatus (30) is configured to heat the oven chamber (12, 112) to temperatures exceeding 450 degrees Celsius.
Statement 20. An open-flame oven apparatus (1, 100) comprising:
   an oven housing (10, 110) surrounding an oven chamber (12, 112) for containing foodstuffs, the oven chamber (12, 112) comprising an oven floor (22);
   a loading opening (26) for loading foodstuffs into the oven chamber (12, 112);
   an aspiration inlet (25) for permitting air flow into the oven chamber (12, 112) from the ambient environment;
   a loading door (28) for closing the loading opening (26), the loading door (28) configured to provide an adjustable aspiration outlet (50, 50') for airflow out of the oven chamber (12, 112); and
   a solid-fuel support apparatus (21, 30) for supporting a solid fuel (31) to be burned, wherein the solid-fuel support apparatus comprises a support surface (21, 62) on which solid fuel (31) can be supported, the support surface comprising a plurality of aspiration apertures (64) for permitting airflow to and around a supported solid fuel (31) on the support surface;
   wherein the solid-fuel support apparatus (21, 30) is configured such that air flow into the oven chamber (12,112) via the aspiration inlet passes though the apertures (64) of the support surface (21,62).
Statement 21. An open-flame oven apparatus as claimed in Statement 20, wherein the aspiration inlet (25) further comprises an aperture (24) in the oven floor (22), and wherein the solid-fuel support apparatus comprises a perforated cap (21) configured to be received in or arranged over the aperture (24), such that air flow into the oven chamber via the aspiration inlet passes through the aspiration apertures of the perforated cap (21), optionally wherein the perforated cap (21) is removable.
Statement 22. An open flame oven apparatus as claimed in Statement 21, wherein the support surface of the perforated cap (21) is configured to be substantially level with the oven floor (22).
Statement 23. An open-flame oven apparatus as claimed in Statement 20 or 21, wherein the solid-fuel support surface (62) is arranged above the oven floor (22), such that the solid-fuel support apparatus (30) defines an aspiration chamber (66) between the oven floor (22) and the support surface (62), the aspiration chamber (66) in communication with the aspiration inlet (25) so as to receive air from the aspiration inlet (25) and distribute received air to the plurality of aspiration apertures (64) in the support surface (62).
Statement 24. An open-flame oven apparatus (1, 100) as claimed in any of Statements 20 to 23, wherein the aspiration inlet (25) comprises an aperture (34) in the oven floor (22).
Statement 25. An open-flame oven apparatus (1, 100) as claimed in Statement 23, wherein the solid-fuel (31) support apparatus comprises a substantially impermeable peripheral wall (68), such that airflow from the aspiration chamber (66) into the oven chamber (12, 112) substantially provided via the aspiration apertures (64) in the support surface (62), optionally wherein the solid-fuel (31) support apparatus is configured to abut a wall of the oven chamber (12, 112), such that the aspiration chamber (66) is formed between the oven floor (22), the oven chamber (12, 112) wall, the peripheral wall (68), and the support surface (62).
Statement 26. An open-flame oven apparatus (1, 100) as claimed in any one of Statements 20-25, wherein the aspiration inlet (25) is adjustable so as to regulate airflow through the aspiration inlet (25), optionally wherein the aspiration inlet (25) is adjustable to a closed configuration in which substantially no airflow is permitted through the aspiration inlet (25).
Statement 27. A multi-functional open-flame oven apparatus (1, 100) as claimed in Statement 26, wherein the aspiration inlet (25) is configured to removably receive a regulator apparatus (25c) for regulating the airflow through the aspiration inlet (25).

## Claims

1. An open-flame oven apparatus (1, 100) comprising:
an oven housing (10, 110) surrounding an oven chamber (12, 112) for containing foodstuffs, the oven chamber (12, 112) comprising an oven floor (22);
a loading opening (26) for loading foodstuffs into the oven chamber (12, 112);
an aspiration inlet (25) for permitting air flow into the oven chamber (12, 112) from the ambient environment;
a loading door (28) for closing the loading opening (26), the loading door (28) configured to provide an adjustable aspiration outlet (50, 50') for airflow out of the oven chamber (12, 112); and
a solid-fuel support apparatus (21, 30) for supporting a solid fuel (31) to be burned, wherein the solid-fuel support apparatus comprises a support surface (21, 62) on which solid fuel (31) can be supported, the support surface comprising a plurality of aspiration apertures (64) for permitting airflow to and around a supported solid fuel (31) on the support surface;
wherein the solid-fuel support apparatus (21, 30) is configured such that air flow into the oven chamber (12,112) via the aspiration inlet passes though the apertures (64) of the support surface (21,62).

2. An open-flame oven apparatus as claimed in claim 1, wherein the aspiration inlet (25) further comprises an aperture (24) in the oven floor (22), and wherein the solid-fuel support apparatus comprises a perforated cap (21) configured to be received in or arranged over the aperture (24), such that air flow into the oven chamber via the aspiration inlet passes through the aspiration apertures of the perforated cap (21), optionally wherein the perforated cap (21) is removable.

3. An open flame oven apparatus as claimed in claim 2, wherein the support surface of the perforated cap (21) is configured to be substantially level with the oven floor (22).

4. An open-flame oven apparatus as claimed in claim 1 or 2, wherein the solid-fuel support surface (62) is arranged above the oven floor (22), such that the solid-fuel support apparatus (30) defines an aspiration chamber (66) between the oven floor (22) and the support surface (62), the aspiration chamber (66) in communication with the aspiration inlet (25) so as to receive air from the aspiration inlet (25) and distribute received air to the plurality of aspiration apertures (64) in the support surface (62).

5. An open-flame oven apparatus (1, 100) as claimed in any preceding claims, wherein the aspiration inlet (25) comprises an aperture (34) in the oven floor (22).

6. An open-flame oven apparatus (1, 100) as claimed in claim 4, wherein the solid-fuel (31) support apparatus comprises a substantially impermeable peripheral wall (68), such that airflow from the aspiration chamber (66) into the oven chamber (12, 112) substantially provided via the aspiration apertures (64) in the support surface (62), optionally wherein the solid-fuel (31) support apparatus is configured to abut a wall of the oven chamber (12, 112), such that the aspiration chamber (66) is formed between the oven floor (22), the oven chamber (12, 112) wall, the peripheral wall (68), and the support surface (62).

7. An open-flame oven apparatus (1, 100) as claimed in any one of the preceding claims, wherein the aspiration inlet (25) is adjustable so as to regulate airflow through the aspiration inlet (25).

8. A multi-functional open-flame oven apparatus (1, 100) as claimed in claim 7, wherein the aspiration inlet (25) is configured to removably receive a regulator apparatus (25c) for regulating the airflow through the aspiration inlet (25).

9. A multi-functional open-flame oven apparatus (1, 100) as claimed in claim 7 or 8, wherein the aspiration inlet (25) is adjustable to a closed configuration in which substantially no airflow is permitted through the aspiration inlet (25).

10. A multi-functional open-flame oven apparatus (1, 100) as claimed in any preceding claim, further comprising a temperature sensor (23) for measuring the temperature in the oven chamber (12, 112).

11. A multi-functional open-flame oven apparatus (1, 100) as claimed in any preceding claim, wherein the solid fuel is configured to heat the oven chamber (12, 112) to temperatures exceeding 450 degrees Celsius.

12. A multi-functional open-flame oven apparatus (1,100) as claimed in any preceding claim, further comprising a blanking cap (48) for selectively closing the aspiration inlet opening.

13. A multi-functional open-flame oven apparatus (1, 100) as claimed in claim 12, wherein the blanking cap (48) is formed from ceramic and/or stone.

14. A multi-functional open-flame oven apparatus (1,100) as claimed in any preceding claim, wherein the oven floor (22) is a ceramic and/or stone floor.

15. A multi-functional open-flame oven apparatus (1, 100) as claimed in any preceding claim, wherein the oven floor is substantially continuous and is formed from a substantially continuous single floor plate or from a plurality of substantially continuous floor plates which abut to form the substantially continuous oven floor.
